# EUROPÄISCHE PATENTSCHRIFT

(11) **EP 3 690 268 B1**
(45) Veröffentlichungstag und Bekanntmachung des Hinweises auf die Patenterteilung: **27.04.2022**
(21) Anmeldenummer: 20154038.2
(22) Anmeldetag: 28.01.2020
(51) Int. Cl.: F16C 33/46, F16C 33/08, F16C 33/10, B23K 9/04

(54) **WÄLZKÖRPERKÄFIG FÜR WÄLZLAGER**
ROLLING ELEMENT CAGE FOR ROLLING BEARINGS
CAGE DE CORPS DE ROULEMENT POUR PALIER À ROULEMENTS

(30) Priorität: 01.02.2019 DE 102019201331
(43) Veröffentlichungstag der Anmeldung: 05.08.2020
(73) Patentinhaber: thyssenkrupp rothe erde Germany GmbH, 44137 Dortmund (DE); thyssenkrupp AG, 45143 Essen (DE)
(72) Erfinder: Janke, Jörg, 33129 Delbrück (DE); Rappold, Jens, 59821 Arnsberg (DE); Sauer, Ludger, 59329 Liesborn / Wadersloh (DE)
(74) Vertreter: thyssenkrupp Intellectual Property GmbH

(56) Entgegenhaltungen:
- DE-A1- 10 147 292
- DE-A1-102014 200 466
- DE-A1-102015 101 464
- DE-U- 7 215 567

## Beschreibung

Die Erfindung betrifft einen Wälzkörperkäfig zur Führung von Wälzkörpern eines Wälzlagers, insbesondere eines Großwälzlagers, wobei der Wälzkörperkäfig mindestens ein Gleitelement aufweist, wobei das Gleitelement mit dem Wälzkörperkäfig verbunden ist, wobei das Gleitelement eine freie Stirnfläche aufweist, die ein Gleitmaterial aufweist.

Ein derartiger Wälzkörperkäfig ist aus dem Stand der Technik bekannt.

Aus der deutschen Patentanmeldung DE 10 2015 101464 A1 ist ein Wälzkörperkäfig bekannt, bei dem der Käfigkörper zumindest teilweise mit einem ersten Gleitelement bedeckt ist, wobei das erste Gleitelement zumindest teilweise mit einem zweiten Gleitelement bedeckt ist. Das erste Gleitelement kann ein bronzehaltiges erstes Gleitelement sein und das zweite Gleitelement kann ein kunststoffhaltiges zweites Gleitelement sein. Das erste Gleitelement kann von dem zweiten Gleitelement vollständig bedeckt sein. In der DE 10 2015 101464 A1 wird beschrieben, dass als bronzehaltiges erstes Gleitelement ein Gleitstück aus Bronze an dem Wälzlagerkäfig angeschweißt oder aufgeschweißt wird. Dabei kann der Käfigkörper aus Stahl bestehen, wodurch gegenüber einem Käfig aus Bronze ein kostengünstigeres Material genutzt wird. Das zweite, kunststoffhaltige Gleitelement kann ein Polyamid aufweisen.

Nachteilig an der aus der DE 10 2015 101464 A1 bekannten Lösung ist, dass eine Schweißverbindung zwischen dem ersten Gleitelement aus Bronze und dem aus Stahl bestehenden Käfigkörper erzeugt werden muss. Solche Schweißverbindungen sind aufwendig in der Herstellung. Das Schweißen muss in Handarbeit erfolgen und kann nicht durch Maschinen übernommen werden, d.h. es ist nicht automatisierbar.

Aus der internationalen Patentanmeldung WO 2013/175294 A1 ist ein Wälzkörperkäfig bekannt, bei dem wenigstens ein unabhängig von dem Käfig hergestelltes Distanzelement vorgesehen ist. Das Distanzelement ist derart mit dem Käfig verbunden, dass es etwa lotrecht zu der von Längs- und Querstegen aufgespannten Fläche hervorragt und mit einer stets gleichbleibenden, freien Stirnfläche an einem Anschlusselement entlang gleitet. Der Käfig kann aus Stahl bestehen. Das Distanzelement ist entweder aus einem anderen Material hergestellt als der Käfig, oder es ist zumindest an seiner freien Stirnfläche mit einem anderen Material beschichtet als dem Material des Käfigs. Als Werkstoffe für das wenigstens eine Distanzelement werden Kunststoff oder Eisen- oder Nichteisenmetall offenbart. Insbesondere wird Messing als Werkstoff für das Distanzelement empfohlen. Das Distanzelement kann lösbar mit dem Käfig verbunden sein, insbesondere in eine Materialaussparung des Käfigs eingeschraubt sein. Alternativ kann das Distanzelement unlösbar mit dem Käfig verbunden sein, insbesondere in einer Materialaussparung des Käfigs mechanisch verpresst sein.

Nachteilig an den aus der WO 2013/175294 A1 bekannten Distanzelementen ist, dass die offenbarten Verfahren zum Verbinden der Distanzelemente mit dem Käfig aufwändig und schwierig automatisierbar sind. Das Einschrauben der Distanzelemente erfordert das aufwändige Einbringen von Gewindebohrungen in den Käfigkörper. Das mechanische Verpressen des Distanzelementes in einer Materialaussparung des Käfigs kann nur schwer so automatisiert werden, dass stets eine gleich gute Verbindungsfestigkeit zwischen Distanzelement und Käfig erreicht wird. Zudem können mögliche, im Betrieb des Lagers auftretende plastische Verformungen des Distanzelementes zu einer Verringerung der durch mechanisches Verpressen erreichten Verbindungsfestigkeit führen.

Aus der deutschen Gebrauchsmusterschrift DE 72 15 567 U ist das Anbringen von Gleitstücken aus Stahl, Messing, Kunststoff oder anderen Werkstoffen an einem Wälzkörperkäfig aus Stahl bekannt. Das Anbringen kann gemäß DE 72 15 567 U durch Schweißen, Nieten, Verschrauben oder Kleben erfolgen.

In der deutschen Patentanmeldung DE 10147 292 A1wird ein Verfahren zur Herstellung eines mit einer Gleitschicht versehenen metallischen Trägerwerkstoffes beschrieben, der als Gleitelement verwendet werden soll. Das Gleitelement wird zur Verwendung in in Gleitlagern, Buchsen, Stoßdämpfern oder Pumpen vorgeschlagen. Das Gleitschichtmaterial wird als Paste auf den Trägerwerkstoff aufgetragen und danach wird der so beschichtete Trägerwerkstoff einer thermischen Behandlung unterworfen. Das Gleitschichtmaterial muss eine sehr spezifische Zusammensetzung mit sehr speziellen Eigenschaften hinsichtlich seines Schmelzpunktes und seiner Glasübergangstemperatur aufweisen. Es werden ausschließlich Ausführungsbeispiele beschrieben, bei denen die Schichtdicke des Gleitschichtmaterials so gering ist, dass die Gleitelemente für einen Einsatz bei Wälzkörperkäfigen von Großwälzlagern nicht geeignet sind.

In der deutschen Patentanmeldung DE 10 2014 200 466 A1 wird vorgeschlagen, ein Gleitstück aus Messing oder einer Messinglegierung an einem Wälzkörperkäfig aus Stahl mittels eines Schließringbolzens zu befestigen. Auf eine Schweißverbindung zwischen Käfig und Gleitstück soll gemäß DE 10 2014 200 466 A1 ausdrücklich verzichtet werden.

Aufgabe der Erfindung ist es, einen Wälzkörperkäfig zur Führung von Wälzkörpern eines Wälzlagers, insbesondere eines Großwälzlagers, mit mindestens einem Gleitelement anzugeben, der einfach und mit gleichbleibender, gut reproduzierbarer Qualität herstellbar ist. Insbesondere soll das mindestens eine Gleitelement durch ein einfaches und gut automatisierbares Verbindungsverfahren mit dem Käfig verbunden werden können. Daher besteht eine Aufgabe der Erfindung in der Angabe eines gut automatisierbaren Herstellungsverfahrens für einen mit Gleitelementen ausgerüsteten Wälzkörperkäfig. Aufgabe der Erfindung ist es auch, ein effizientes Verfahren zur Herstellung eines Gleitelements anzugeben. Ferner soll ein Verkippen des Wälzkörperkäfigs verhindert werden.

Gelöst wird diese Aufgabe hinsichtlich des Wälzkörperkäfigs durch einen Wälzkörperkäfig mit den Merkmalen des unabhängigen Patentanspruchs 1. Hinsichtlich des Herstellungsverfahrens für einen mit Gleitelementen ausgerüsteten Wälzkörperkäfig wird die Aufgabe gelöst durch ein Herstellungsverfahren mit den Merkmalen des Patentanspruchs 8. Hinsichtlich des Verfahrens zur Herstellung eines Gleitelements wird die Aufgabe gelöst durch ein Herstellungsverfahren mit den Merkmalen des Patentanspruchs 12. Vorteilhafte Weiterbildungen der Erfindung ergeben sich aus den jeweiligen Unteransprüchen, der nachfolgenden Beschreibung sowie den Zeichnungen.

Der erfindungsgemäße Wälzkörperkäfig dient zur Führung von Wälzkörpern eines Wälzlagers, insbesondere eines Großwälzlagers, wobei der Wälzkörperkäfig mindestens ein Gleitelement aufweist, wobei das Gleitelement mit dem Wälzkörperkäfig verbunden ist, wobei das Gleitelement eine freie Stirnfläche aufweist, die ein Gleitmaterial aufweist. Erfindungsgemäß ist vorgesehen, dass das Gleitelement einen vorgefertigten Trägerkörper aus Stahl aufweist, der mit dem Wälzkörperkäfig verschweißt ist, wobei die freie Stirnfläche des Gleitelements eine Funktionsschicht aus dem Gleitmaterial aufweist.

Der aus Stahl bestehende Trägerkörper des Gleitelements lässt sich auf einfache und gut automatisierbare Weise an den ebenfalls aus Stahl bestehenden Wälzkörperkäfig anschweißen. Der Trägerkörper kann aus demselben Stahlwerkstoff bestehen wie der Käfig. Aber auch wenn der Trägerkörper eine andere Stahlzusammensetzung aufweist als der Käfig, so lässt er sich aufgrund der Werkstoffähnlichkeit dennoch gut und unproblematisch mit dem Stahlmaterial des Käfigs verschweißen.

Im Rahmen der Erfindung wird das Gleitelement strukturell in zwei Funktionsbereiche aufgeteilt. Der Trägerkörper aus Stahl bildet einen ersten Funktionsbereich, dessen Funktion insbesondere darin besteht, eine einfache, kostengünstige, gut reproduzierbare und automatisierbare Schweißverbindung mit dem Käfig zu ermöglichen. Die Funktionsschicht aus dem Gleitmaterial bildet einen zweiten Funktionsbereich, dessen Funktion insbesondere darin besteht, trotz einer nur geringen Einsatzmenge an Gleitmaterial dauerhaft die notwendigen Gleiteigenschaften des Gleitelements gegenüber den Kontaktpartnern innerhalb des Wälzlagers zu gewährleisten. Durch die erfindungsgemäße Lösung werden somit insbesondere folgende Vorteile erreicht:
Der Materialeinsatz in Bezug auf das sehr kostenintensive Gleitmaterial wird minimiert, weil dessen Einsatz auf die Funktionsschicht beschränkt ist.
Das zum Verschweißen des Trägerkörpers mit dem Käfig erforderliche Schweißverfahren ist wesentlich wirtschaftlicher und besser automatisierbar als diejenigen Schweißverfahren, die verwendet werden müssen, wenn ein komplett aus Gleitmaterial wie z.B. Bronze bestehendes Gleitelement verwendet wird.

Gegenüber den aus dem Stand der Technik bekannten Verfahren zum Verbinden eines als separates Bauteil ausgebildeten Gleitelements mit dem Käfig durch Einschrauben oder mechanisches Verpressen in eine Materialausnehmung des Käfigs besteht bei der vorliegenden Erfindung der Vorteil, dass das Verschweißen ohne aufwändige vorbereitende Arbeiten durchgeführt werden kann. Aufgrund der erfindungsgemäß gewählten gleichartigen Werkstoffpaarung von Trägerkörper und Käfigkörper ist das Schweißverfahren gut automatisierbar. Dies ermöglicht die automatisierte Herstellung von mit erfindungsgemäßen Gleitelementen ausgestatteten Wälzlagerkäfigen.

Unter anderem wird dadurch der Vorteil erreicht, dass die zur Fertigstellung eines erfindungsgemäßen Wälzlagerkäfigs benötigte Taktzeit erheblich kürzer ist als bei Verfahren, bei denen Gleitelemente mit dem Käfig verschweißt werden, die aus einem Material (wie z.B. Bronze) bestehen, das sich stark unterscheidet von dem Stahlmaterial des Käfigs. Dadurch reduzieren sich die Herstellungskosten für den erfindungsgemäßen, mit Gleitelementen bestückten Wälzlagerkäfig. Größere Stückzahlen von erfindungsgemäßen Wälzkörperkäfigen lassen sich mit guter Reproduzierbarkeit hinsichtlich der Verbindungsfestigkeit zwischen den Gleitelementen und dem Käfigkörper herstellen. Dies ist insbesondere wichtig für solche Großwälzlager, die in erheblichen Stückzahlen in Serie gefertigt werden, wie z.B. Großwälzlager für Windenergieanlagen, also etwa Blattlager, Rotorlager oder Azimutlager.

Die Funktionsschicht kann stoffschlüssig oder formschlüssig mit dem Trägerkörper des Gleitelements verbunden sein. Als stoffschlüssiges Verbindungsverfahren kann zum Beispiel das Auftragsschweißen eingesetzt werden. Insbesondere kann das Auftragsschweißen im MSG-Verfahren (Metallschutzgas-Schweißverfahren) eingesetzt werden. Das Auftragsschweißen nach dem MSG-Verfahren kann z.B. als CMT (Cold Metal Transfer) Schweißverfahren ausgebildet sein. Weitere mögliche Schweißverfahren sind das Metall-Intergas-Schweißen (MIG), das Metall-Aktivgas-Schweißen (MAG), das Wolfram-Inertgas-Schweißen (WIG, kalt oder warm), das Plasmaauftragsschweißen (PTA) mit Pulver oder das Laserauftragsschweißen mit Pulver. Als formschlüssiges Verbindungsverfahren können z.B. das Lichtbogenspritzen mit Massivdrähten oder mit Fülldrähten, das Flammspritzen oder das Elektroschlacke-Bandplattieren eingesetzt werden.

Der Wälzkörperkäfig weist einen kreisringförmigen Käfigkörper mit einer sich in Axialrichtung des Käfigkörpers erstreckenden Mittelachse auf, wobei der Käfigkörper zwei sich im Wesentlichen senkrecht zur Mittelachse erstreckende erste Oberflächen und zwei sich im Wesentlichen parallel zur Mittelachse erstreckende zweite Oberflächen aufweist, wobei der Trägerkörper des mindestens einen Gleitelements mit einer der ersten Oberflächen verschweißt ist. Der erfindungsgemäße Wälzkörperkäfig kann also eines oder mehrere Gleitelemente aufweisen.

Der erfindungsgemäße Wälzkörperkäfig weist Aufnahmeöffnungen zur Aufnahme von Wälzkörpern auf, wobei zwischen zwei benachbarten Aufnahmeöffnungen ein sich in radialer Richtung des Wälzkörperkäfigs erstreckender Steg angeordnet ist. Erfindungsgemäß ist das mindestens eine Gleitelement im Bereich des Steges über mindestens eine Schweißnaht mit dem Wälzkörperkäfig verschweißt. Dabei können mehrere einzelne Gleitelemente entlang des Steges angeordnet und mit diesem verschweißt werden, um einen Gleitkontakt der Funktionsschicht auf dem Gleitmaterial an mehreren entlang des Steges verteilt angeordneten Kontaktpunkten zu erreichen und so eine gleichmäßige Abstützung zu erreichen und ein Verkippen des Wälzkörperkäfigs zu verhindern.

Das Gleitelement kann oder die Gleitelemente können zusätzlich auf einer oder beiden der zweiten Oberflächen angeordnet sein. Dann wirken die Gleitelemente in radialer Richtung des Wälzkörperkäfigs, d.h. die aus Gleitmaterial bestehende Funktionsschicht des Gleitelements tritt im Einsatzfall in radialer Richtung in Kontakt mit einem Gleitpartner, beispielsweise mit einem Lagerring des Wälzlagers.

Bevorzugt können ein Gleitelement oder mehrere Gleitelemente auf einer oder beiden der ersten Oberflächen und gleichzeitig ein Gleitelement oder mehrere Gleitelemente auf einer oder beiden der zweiten Oberflächen angeordnet sein. Dann wirken die Gleitelemente sowohl in radialer als auch in axialer Richtung des Wälzkörperkäfigs, d.h. die aus Gleitmaterial bestehenden Funktionsschichten der Gleitelemente treten im Finsatzfall sowohl in radialer als auch in axialer Richtung in Kontakt mit einem Gleitpartner, beispielsweise mit den Lagerringen des Wälzlagers. Auf diese Weise ist der Wälzkörperkäfig sowohl in radialer als auch in axialer Richtung gegen ein ungeschütztes Anlaufen gegen die Lagerringe geschützt.

Nach einer Ausführungsform der Erfindung ist mindestens ein Gleitelement mit mindestens einer der ersten Oberflächen und mindestens ein weiteres Gleitelement mit mindestens einer der zweiten Oberflächen verschweißt.

Nach einer Ausführungsform der Erfindung sind über den Umfang des Wälzkörperkäfigs verteilt mehrere Gleitelemente mit mindestens einer der ersten Oberflächen und mehrere Gleitelemente mit mindestens einer der zweiten Oberflächen verschweißt. Bevorzugt sind auf den beiden ersten Oberflächen und auf den beiden zweiten Oberflächen jeweils mehrere Gleitelemente angeordnet und mit den Oberflächen verschweißt.

Erfindungsgemäß kann als Alternative zu mehreren entlang des Steges verteilt angeordneten Gleitelementen vorgesehen, dass auf dem Steg ein längliches Gleitelement angeordnet und mit diesem verschweißt wird, welches sich mit seiner Längsachse entlang des Steges in Radialrichtung des Wälzkörperkäfigs erstreckt. Ein solches längliches Gleitelement weist eine Länge in radialer Richtung des Wälzkörperkäfigs auf, die größer ist als seine Breite in Umfangsrichtung des Wälzkörperkäfigs. Ein solches Gleitelement kann eine Länge in radialer Richtung des Wälzkörperkäfigs aufweisen, die in etwa der Länge des Steges in radialer Richtung entspricht. Die mit der Funktionsschicht aus Gleitmaterial versehene freie Stirnfläche eines solchen Gleitelements ist dann in axialer Richtung einem Gleitpartner zugewandt und stützt sich im Wesentlichen über die Länge des Steges an dem Gleitpartner (i.d.R. sind die Gleitpartner die Lagerringe des Wälzlagers oder mit diesen Lagerringen verbundene separate Bauteile) ab. Dies führt zu einer besonders tragfähigen Abstützung des Wälzkörperkäfigs gegen den/die Gleitpartner. Ein Verkippen des Wälzkörperkäfigs wird durch diese Abstützung über eine größere Länge verhindert.

Ähnlich wie bei den vorstehend beschriebenen, in axialer Richtung abstützend wirkenden Gleitelementen können auch die Gleitelemente ausgebildet sein, die in radialer Richtung des Wälzkörperkäfigs abstützend wirken. Diese Gleitelemente weisen dann eine Länge in Umfangsrichtung des Wälzkörperkäfigs auf, die größer ist als ihre Breite in axialer Richtung des Wälzkörperkäfigs. Diese Gleitelemente bewirken dann in radialer Richtung eine robuste und tragfähige Abstützung des Wälzkörperkäfigs gegen die Gleitpartner.

Nach einer Ausführungsform der Erfindung weist die freie Stirnfläche des Gleitelements oder der Gleitelemente eine konturierte Oberfläche auf. Durch die Kontur der Oberfläche der freien Stirnfläche wird erreicht, dass sich das in dem Wälzlager sich befindende Schmiermittel besser auf der Gleitfläche verteilt.

Nach einer Ausführungsform der Erfindung weist die konturierte Oberfläche einen ebenen Mittelabschnitt auf, wobei in Umfangsrichtung gesehen an beiden Seiten des Mittelabschnitts Randabschnitte vorgesehen sind, wobei die Höhe des Gleitelements in axialer Richtung im Bereich der Randabschnitte geringer ist als im Bereich des Mittelabschnitts. Die freie Stirnfläche kann im Bereich der Randabschnitte zum Beispiel ausgehend von dem ebenen Mittelabschnitt linear nach außen abfallend ausgebildet sein, so dass die freie Stirnfläche in Umfangsrichtung von dem ebenen Mittelabschnitt aus schräg abfallende Randbereiche aufweist. Im Zusammenspiel mit einer Gegenfläche eines Gleitpartners wird durch die schräg abfallenden Randabschnitte der freien Stirnfläche zwischen der freien Stirnfläche und der Gegenfläche des Gleitpartners ein auf den ebenen Mittelabschnitt spitz zulaufender keilförmiger Spalt erzeugt. Dieser keilförmige Spalt bewirkt insbesondere eine verbesserte Schmierung der Gleitfläche, weil sich ein in dem Wälzlager vorhandenes Schmiermittel wie z.B. Schmieröl besser auf der freien Stirnfläche verteilt. Der keilförmige Spalt sorgt für eine Erhöhung des Schmierdrucks im Spalt und reduziert die Anfälligkeit für Fressen.

Die Aufgabe, ein gut automatisierbares Herstellungsverfahren für einen mit Gleitelementen ausgerüsteten Wälzkörperkäfig anzugeben, wird erfindungsgemäß gelöst mit einem Verfahren gemäß Anspruch 8.

Da der Trägerkörper des Gleitelements und der Käfigkörper des Wälzkörperkäfigs beide aus Stahlwerkstoff bestehen ist das Schweißverfahren, mit dem der Trägerkörper an den Käfigkörper angeschweißt wird, sehr gut automatisierbar. Durch die Automatisierung des Schweißens wird eine geringe Taktzeit für die Herstellung der Schweißverbindung erreicht. Wälzkörperkäfige, bei denen eine größere Anzahl von Gleitelementen an allen vier Oberflächen des Käfigkörpers befestigt werden sollen, können somit effizienter, schneller und mit geringeren Herstellungskosten hergestellt werden.

Nach einer Ausführungsform des Herstellungsverfahrens für den Wälzkörperkäfig wird ein Gleitelement verwendet, welches in radialer Richtung eine Länge aufweist, die größer ist als die Breite des Gleitelements in Umfangsrichtung, wobei die mindestens eine Schweißnaht entlang einer Längsseite des Trägerkörpers in radialer Richtung erzeugt wird.Und es kann ein Gleitelement verwendet werden, welches in Umfangsrichtung eine Länge aufweist, die größer ist als die Breite des Gleitelements in Axialrichtung, wobei die mindestens eine Schweißnaht entlang einer Längsseite des Trägerkörpers in Umfangsrichtung erzeugt wird. Um eine besonders sichere und feste Verbindung zwischen dem Gleitelement und dem Käfigkörper zu erhalten kann der Trägerkörper an seinen beiden Längsseiten mit dem Käfigkörper verschweißt werden. An jeder dem Käfigkörper zugewandten Längsseite des Trägerkörpers erstreckt sich dann eine Schweißnaht, durch die der Trägerkörper mit dem Käfigkörper stoffschlüssig verbunden ist.

Die Aufgabe, ein effizientes Verfahren zur Herstellung eines Gleitelements anzugeben, wird erfindungsgemäß gelöst durch ein Verfahren zur Herstellung eines Gleitelements zur Verwendung in einem Wälzkörperkäfig, welches folgende Verfahrensschritte umfasst:
G1) Bereitstellen eines Stahlbandes oder eines Vierkantstabes aus Stahl, wobei das Stahlband oder der Vierkantstab einen rechteckigen Querschnitt aufweist und eine Länge besitzt, die größer ist als eine Breite des Stahlbandes oder Vierkantstabes und größer als die Länge des herzustellenden Gleitelements;
G2) Aufbringen eines Gleitmaterials auf eine Oberfläche des Stahlbandes oder Vierkantstabes zur Bildung einer Funktionsschicht, wobei sich die Oberfläche an einer Schmalseite des Stahlbandes oder Vierkantstabes in dessen Längsrichtung erstreckt;
G3) Zerteilen des mit der Funktionsschicht versehenen Stahlbandes oder Vierkantstabes quer zu seiner Längsrichtung in einzelne Abschnitte, um einzelne Gleitelemente zu erhalten, die an einer freien Stirnfläche eine Funktionsschicht aus Gleitmaterial und einen die Funktionsschicht tragenden Trägerkörper aufweisen.

Durch dieses Herstellungsverfahren für Gleitelemente kann eine Vielzahl von Gleitelementen kostengünstig schnell hergestellt werden. Die Qualität und die wesentlichen Merkmale der Funktionsschicht (wie zum Beispiel die Schichtdicke) sind für eine Vielzahl einzelner Gleitelemente, die von dem mit der Funktionsschicht versehenen Stahlband oder Vierkantstab abgeteilt werden, konstant. Dies ist ein wichtiger Vorteil gegenüber solchen Verfahren, bei denen jeweils einzelne Gleitelemente separat voneinander hergestellt werden, weil bei diesen separat voneinander hergestellten Gleitelementen die Qualität und die wesentlichen Merkmale der Gleitelemente viel stärker variieren können.

Nach einer Ausführungsform des Verfahrens zur Herstellung der Gleitelemente erfolgt das Aufbringen des Gleitmaterials auf die Oberfläche des Stahlbandes oder Vierkantstabes durch Auftragsschweißen oder durch ein Beschichtungsverfahren. Diese Verfahren sind gut automatisierbar und es können über längere Strecken Funktionsschichten mit gleichbleibender Schichtdicke aufgebracht werden.

Die Erfindung wird nachfolgend anhand der Figuren näher erläutert. Es zeigen jeweils schematisch
Fig. 1 einen Umfangsausschnitt eines erfindungsgemäßen Wälzkörperkäfigs mit sich in radialer Richtung erstreckenden Gleitelementen in einer Draufsicht;
Fig. 2 eine vergrößerte Darstellung eines auf den Käfigkörper aufgebrachten Gleitelements in einer Schnittdarstellung entlang der Linie A-A gemäß Fig. 1 ;
Fig. 3 eine Einzeldarstellung eines erfindungsgemäßen Gleitelements gemäß der Schnittdarstellung entsprechend Fig. 2 ;
Fig. 4 eine gegenüber der in den Fig. 1 bis 3 abgewandelte Ausführungsform der Erfindung mit einerseits in axialer Richtung wirksamen Gleitelementen und andererseits in radialer Richtung wirksamen Gleitelementen.

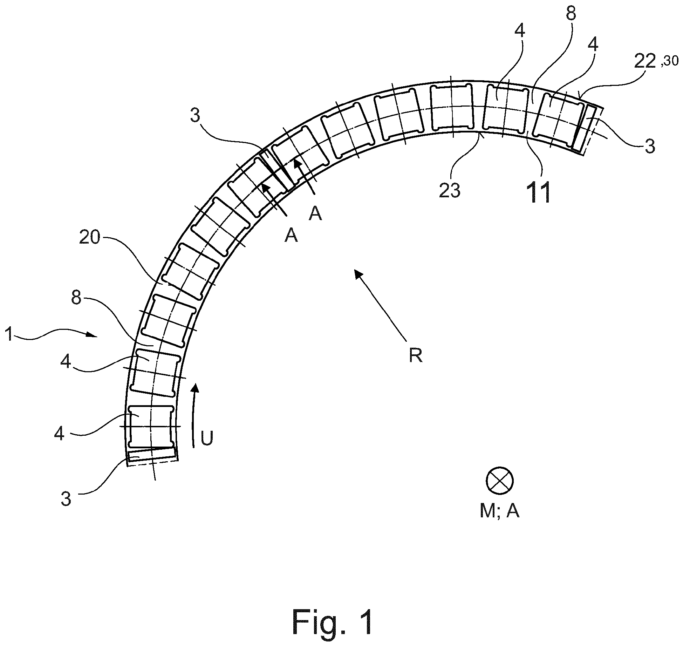

Fig. 1 zeigt einen Ausschnitt eines kreisringförmigen erfindungsgemäßen Wälzkörperkäfigs 1. Der Wälzkörperkäfig 1 weist einen Käfigkörper 11 auf. Die Mittelachse M des Wälzkörperkäfigs verläuft senkrecht zur Zeichnungsebene in Axialrichtung A. In Umfangsrichtung U weist der Käfigkörper 11 mehrere nebeneinander angeordnete Aufnahmeöffnungen 4 zur Aufnahme von (nicht dargestellten) Wälzkörpern auf. Zwischen benachbarten Aufnahmeöffnungen 4 sind sich in radialer Richtung R erstreckende Stege 8 angeordnet. Die Aufnahmeöffnungen 4 werden somit in Umfangsrichtung U durch die Stege 8 voneinander abgegrenzt.

Der Käfigkörper 11 weist zwei sich senkrecht zur Mittelachse M erstreckende erste Oberflächen 20, 21 und zwei sich im Wesentlichen parallel zur Mittelachse M erstreckende zweite Oberflächen 22, 23 auf. In der in Fig. 1 dargestellten Draufsicht ist lediglich eine der ersten Oberflächen, nämlich die Oberfläche 20, zu sehen. Die andere erste Oberfläche 21 liegt unterhalb der Zeichnungsebene und ist nicht zu sehen.

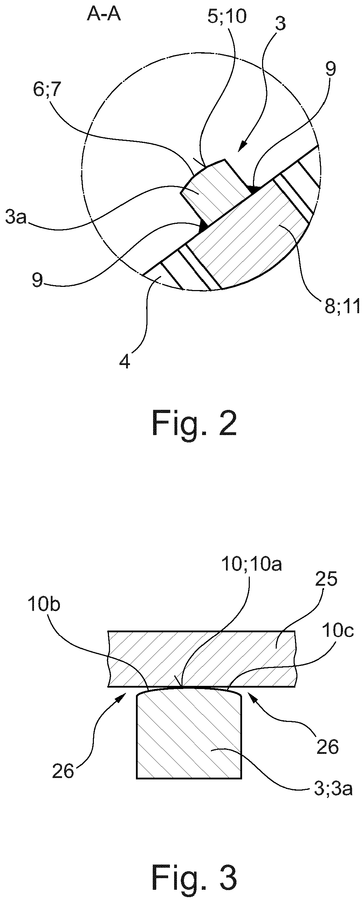

Auf dem in Fig. 1 dargestellten Ausschnitt der Oberfläche 20 des Käfigkörpers 11 sind Gleitelemente 3 angeordnet. Die in Fig. 1 dargestellten Gleitelemente 3 weisen in radialer Richtung R eine Länge auf, die größer ist als die Breite der Gleitelemente 3 in Umfangsrichtung U. Die Gleitelemente 3 sind jeweils im Bereich der Stege 8 angeordnet und über mindestens eine Schweißnaht 9 (vgl. Fig. 2 ) mit dem Wälzkörperkäfig 1 verbunden. Die Länge der Gleitelemente 3 in radialer Richtung R entspricht in etwa der Länge der Stege 8 in radialer Richtung R.

Die Gleitelemente 3 weisen einen vorgefertigten, d.h. separat von dem Käfigkörper 11 hergestellten Trägerkörper 3a auf. Die dem Betrachter der Fig. 1 zugewandte freie Stirnfläche 5 der Gleitelemente 3 weist eine aus Gleitmaterial 6 bestehende Funktionsschicht 7 auf. Die Funktionsschicht 7 ist stoffschlüssig oder formschlüssig oder stoff- und formschlüssig mit dem Trägerkörper 3a verbunden.

Fig. 2 zeigt eine Schnittdarstellung entlang der Linie A-A in Fig. 1 . Das Gleitelement 3 ist mit zwei Schweißnähten 9 an den Steg 8 des Käfigkörpers 11 angeschweißt. Die Schweißnähte 9 verbinden den aus Stahl bestehenden Trägerkörper 3a des Gleitelements 3 mit dem Steg 8 des aus Stahl bestehenden Käfigkörpers stoffschlüssig. An seiner freien Stirnfläche 5 weist das Gleitelement 3 eine Funktionsschicht 7 auf. Die Funktionsschicht 7 besteht aus einem Gleitmaterial 6. Im dargestellten Ausführungsbeispiel ist das Gleitmaterial 6 mittels Auftragsschweißen auf den Trägerkörper 3a aufgebracht worden.

Das in den Fig. 1 und 2 dargestellte Gleitelement 3 erstreckt sich in radialer Richtung R in etwa über die gesamte radiale Länge des Steges 8. Dadurch wird eine große Gleitfläche zur Verfügung gestellt. Die freie Stirnfläche 5 des Gleitelements 3 ist nicht eben, sondern konturiert ausgebildet, d.h. die Oberfläche 10 der freien Stirnfläche 5 weist eine Kontur auf. Die konturierte Oberfläche dient dazu, dass sich Schmiermittel besser auf der mit einem Gleitpartner 25 in Kontakt tretenden Oberfläche 10 des Gleitelements 3 verteilen kann. Die bessere Schmierstoffverteilung auf der Oberfläche 10 sorgt für eine verringerte Gleitreibung zwischen dem Gleitelement 3 und dem Gleitpartner 25, der z.B. die Laufbahn eines Lagerrings sein kann. Dadurch wird der Verschleiß verringert.

Die konturierte Oberfläche 10 weist in dem dargestellten Ausführungsbeispiel einen ebenen Mittelabschnitt 10a und Randabschnitte 10b, 10 c auf. Ausgehend von dem Mittelabschnitt 10a fällt die Oberfläche 10 in Umfangsrichtung U nach außen hin ab, d.h. ausgehend von dem ebenen Mittelabschnitt 10a verringert sich im Bereich der Randabschnitte 10b, 10c in axialer Richtung des Wälzkörperkäfigs die Höhe des Gleitelements 3. Im dargestellten Ausführungsbespiel weist das Gleitelement 3 im Bereich des Mittelabschnitts 10a seine maximale Höhe in Axialrichtung auf. Ausgehend von dieser maximalen Höhe verringert sich die Höhe des Gleitelements 3 entlang der Umfangsrichtung U. Im dargestellten Ausführungsbeispiel nimmt die Höhe des Gleitelements 3 in den Randabschnitten 10b, 10c linear ab. Durch die dadurch im Zusammenspiel mit dem Gleitpartner 26 entstehenden, keilförmig zum Mittelabschnitt 10a hin zulaufenden Spalte 26 verteilt sich das Schmiermittel besonders gut auf der gesamten Oberfläche 10. In Fig. 3 sind das mit einem Gleitpartner 25 zusammenwirkende Gleitelement 3 und die keilförmigen Spalte 26 schematisch dargestellt.

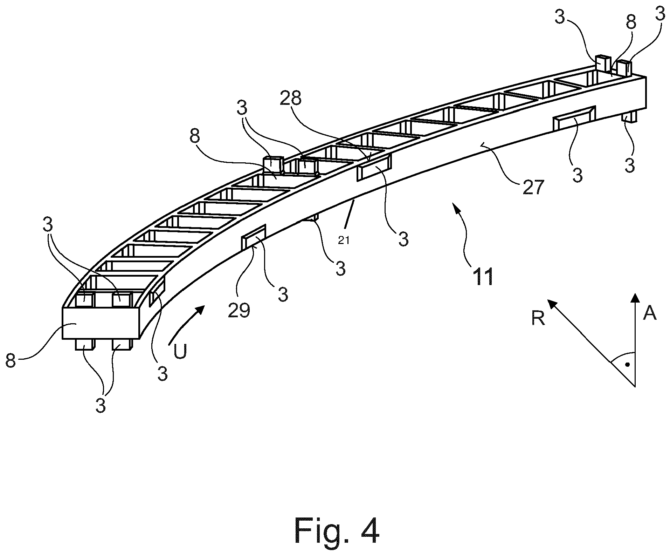

Fig. 4 zeigt eine gegenüber der in den Fig. 1 bis 3 dargestellten Ausführungsform abgewandelte Ausführungsform der Erfindung. Bei der in Fig. 4 dargestellten Ausführungsform sind sowohl in axialer Richtung A wirksame Gleitelemente 3 als auch in radialer Richtung R wirksame Gleitelemente 3 vorgesehen. Anders als bei der Ausführungsform nach den Fig. 1 bis 3 erstreckt sich in radialer Richtung R nicht ein einziges Gleitelement 3 im Wesentlichen über die gesamte radiale Erstreckung eines Steges 8 des Käfigkörpers 11, sondern es sind auf einem Steg 8 zwei voneinander in radialer Richtung R beabstandet angeordnete Gleitelemente 3 vorgesehen. Die in axialer Richtung A wirksamen Gleitelemente sind auf beiden Schmalseiten der Stege 8 angeordnet, so dass der Käfigkörper 11 in beide Axialrichtungen durch die Gleitelemente 3 abgestützt wird. Zusätzlich sind in Fig. 4 auch in radialer Richtung R wirksame Gleitelemente 3 vorgesehen. Die Länge dieser in radialer Richtung R wirksamen Gleitelemente 3 in Umfangsrichtung U gesehen ist größer als deren Breite in Axialrichtung A. Die in radialer Richtung R wirksamen Gleitelemente 3 sind auf der inneren Mantelfläche 27 des Käfigkörpers 11 angeordnet. In der in Fig. 4 dargestellten Ausführungsform der Erfindung sind die in radialer Richtung R wirksamen Gleitelemente 3 immer abwechselnd an dem axial oberen Rand 28 und an dem axial unteren Rand 29 der inneren Mantelfläche 27 angeordnet. Dadurch wird eine sichere Abstützung des Wälzkörperkäfigs 1 gegen seinen (in Fig. 4 nicht dargestellten) Gleitpartner 25 in radialer Richtung R über die gesamte axiale Höhe des Käfigkörpers 11 erreicht.

Grundsätzlich kann die Position der Gleitelemente beliebig gewählt werden. Die Breite der Gleitstücke ist so gewählt, dass kein oder nur geringer Verschleiß auf den Reibflächen zu erwarten ist. Die Reibflächen können somit beliebig vergrößert werden.

Auch auf der (in Fig. 4 nicht sichtbaren) äußeren Mantelfläche 30 des Käfigkörpers 11 können erfindungsgemäß Gleitelemente 3 angeordnet sein. Die Anordnung dieser Gleitelemente 3 auf der äußeren Mantelfläche 30 kann dabei der Anordnung der Gleitelemente 3 auf der inneren Mantelfläche 27 entsprechen. Wenn auch auf der äußeren Mantelfläche 30 Gleitelemente 3 angeordnet sind, dann kann sich der Käfigkörper 11 sowohl in radialer Richtung R als auch in axialer Richtung A jeweils in beide Richtungen gleitend gegen einen Gleitpartner 25 abstützen, d.h. in radialer Richtung R sowohl nach innen als auch nach außen und in axialer Richtung A sowohl nach oben als auch nach unten.

Es versteht sich, dass auch bei der in den Figuren 1 bis 3 dargestellten Ausführungsform analog zu der in Fig. 4 dargestellten Ausführungsform in radialer Richtung R wirksame Gleitelemente 3 auf der inneren Mantelfläche 27 und/oder auf der äußeren Mantelfläche 30 vorgesehen sein können. Ebenso können bei der in Fig. 1 dargestellten Ausführungsform auch auf der in der Draufsicht der Fig. 1 nicht sichtbaren Schmalseite der Stege 8 weitere in axialer Richtung A wirksame Gleitelemente 3 vorgesehen sein, die den Käfigkörper 11 in axialer Richtung A abstützen.

### Bezugszeichenliste

1 : Wälzkörperkäfig
3 : Gleitelement
3a : Trägerkörper
4 : Aufnahmeöffnung
5 : Stirnfläche
6 : Gleitmaterial
7 : Funktionsschicht
8 : Steg
9 : Schweißnaht
10 : Oberfläche
10a : Mittelabschnitt
10b : Randabschnitt
10c : Randabschnitt
11 : Käfigkörper
12 : Schweißnaht
13 : Längsseite
15 : Oberfläche
20 : Oberfläche
21 : Oberfläche
22 : Oberfläche
23 : Oberfläche
24 : Anlagefläche
25 : Gleitpartner
26 : Spalt
27 : Mantelfläche
28 : Rand
29 : Rand
30 : Mantelfläche
A : Axialrichtung
R : Radialrichtung
U : Umfangsrichtung

## Patentansprüche

1. Wälzkörperkäfig (1) zur Führung von Wälzkörpern eines Wälzlagers, insbesondere eines Großwälzlagers, wobei der Wälzkörperkäfig (1) mindestens ein Gleitelement (3) aufweist, wobei das Gleitelement (3) mit dem Wälzkörperkäfig (1) verbunden ist, wobei das Gleitelement (3) eine freie Stirnfläche (5) aufweist, die ein Gleitmaterial (6) aufweist,
**dadurch gekennzeichnet,**
**dass** das Gleitelement (3) einen vorgefertigten Trägerkörper (3a) aus Stahl aufweist, der mit dem Wälzkörperkäfig (1) verschweißt ist, wobei die freie Stirnfläche (5) des Gleitelements (3) eine Funktionsschicht (7) aus dem Gleitmaterial (6) aufweist,
wobei der Wälzkörperkäfig (1) einen kreisringförmigen Käfigkörper (11) mit einer sich in Axialrichtung des Käfigkörpers erstreckenden Mittelachse (M) aufweist, wobei der Käfigkörper zwei sich im Wesentlichen senkrecht zur Mittelachse (M) erstreckende erste Oberflächen (20, 21) aufweist,
wobei der Wälzkörperkäfig (1) Aufnahmeöffnungen (4) zur Aufnahme der Wälzkörper (2) aufweist,
wobei zwischen zwei benachbarten Aufnahmeöffnungen (4) ein sich in radialer Richtung (R) erstreckender Steg (8) angeordnet ist, wobei das mindestens eine Gleitelement (3) auf einem der Stege (8) derart angeordnet wird, dass der Trägerkörper (3a) mit einer Anlagefläche (24) auf dem Steg (8) aufliegt und über mindestens eine Schweißnaht (9) mit dem Wälzkörperkäfig (1) verschweißt ist,
wobei die Länge des mindestens einen Gleitelements (3) in radialer Richtung (R) größer ist als die Breite des mindestens einen Gleitelements (3) in Umfangsrichtung (U),
und wobei die Länge des mindestens einen Gleitelements (3) in radialer Richtung (R) in etwa der Länge des Steges (8) in radialer Richtung (R) entspricht, oder wobei mehrere einzelne Gleitelemente (3) entlang des Steges (8) angeordnet und mit diesem verschweißt sind.

2. Wälzkörperkäfig (1) nach Anspruch 1, **dadurch gekennzeichnet, dass** die Funktionsschicht (7) stoffschlüssig oder formschlüssig mit dem Trägerkörper (3a) verbunden ist.

3. Wälzkörperkäfig (1) nach Anspruch 1 oder 2, **dadurch gekennzeichnet, dass** der Wälzkörperkäfig (1) zwei sich im Wesentlichen parallel zur Mittelachse (M) erstreckende zweite Oberflächen (22, 23) aufweist, wobei mindestens ein weiteres Gleitelement (3) mit seinem Trägerkörper (3a) mit mindestens einer der zweiten Oberflächen (22, 23) verschweißt ist.

4. Wälzkörperkäfig (1) nach Anspruch 4, **dadurch gekennzeichnet, dass** über den Umfang des Wälzkörperkäfigs (1) verteilt mehrere Gleitelemente (3) mit mindestens einer der ersten Oberflächen (20, 21) und mehrere Gleitelemente (3) mit mindestens einer der Zweiten Oberflächen (22, 23) verschweißt sind.

5. Wälzkörperkäfig (1) nach einem der vorangehenden Ansprüche, **dadurch gekennzeichnet, dass** die freie Stirnfläche (5) eine konturierte Oberfläche (10) aufweist.

6. Wälzkörperkäfig (1) nach Anspruch 5, **dadurch gekennzeichnet, dass** die konturierte Oberfläche (10) des Gleitelements (3) einen ebenen Mittelabschnitt (10a) aufweist, wobei in Umfangsrichtung (U) gesehen an beiden Seiten des Mittelabschnitts (10a) Randabschnitte (10b, 10c) vorgesehen sind, wobei die Höhe des Gleitelements (3) in axialer Richtung (A) im Bereich der Randabschnitte (10b, 10c) geringer ist als im Bereich des Mittelabschnitts (10a).

7. Wälzkörperkäfig (1) nach Anspruch 6, **dadurch gekennzeichnet**, dassdie Randabschnitte (10b, 10c) ausgehend von dem Mittelabschnitt (10a) in Umfangsrichtung (U) linear abfallen.

8. Verfahren zur Herstellung eines Wälzkörperkäfigs (1) zur Führung von Wälzkörpern (2) eines Wälzlagers, insbesondere eines Großwälzlagers, umfassend folgende Verfahrensschritte:
V1) Bereitstellen eines kreisringförmigen Käfigkörpers (11) aus Stahl mit in Umfangsrichtung (U) verteilt angeordneten Aufnahmeöffnungen (4) zur Aufnahme der Wälzkörper, wobei der Käfigkörper (11) eine sich in Axialrichtung des Käfigkörpers (11) erstreckende Mittelachse (M) aufweist, wobei der Käfigkörper (11) zwei sich im Wesentlichen parallel zur Mittelachse (M) erstreckende erste Oberflächen (20, 21) und zwei sich im Wesentlichen senkrecht zur Mittelachse (M) erstreckende zweite Oberflächen (22, 23) aufweist;
V2) Bereitstellen mindestens eines Gleitelements (3), welches einen Trägerkörper (3a) aus Stahl und eine freie Stirnfläche (5) mit einer Funktionsschicht (7) aus einem Gleitmaterial (6) aufweist;
V3) Anordnen des mindestens einen Gleitelements (3) auf mindestens einer der ersten Oberflächen (20, 21) derart, dass der Trägerkörper (3a) mit einer Anlagefläche (24) an dem Käfigkörper (11) anliegt und die freie Stirnfläche (5) an dem der Anlagefläche (24) gegenüberliegenden Ende des Gleitelements (3) angeordnet ist;
V4) Verbinden des Trägerkörpers (3a) mit mindestens einer der ersten Oberflächen (20, 21) oder zweiten Oberflächen (22, 23) des Käfigkörpers (11) durch mindestens eine Schweißnaht (12),
wobei der Käfigkörper (11) jeweils zwischen zwei benachbarten Aufnahmeöffnungen (4) angeordnete, sich in radialer Richtung (R) erstreckende Stege (8) aufweist, wobei das mindestens eine Gleitelement (3) auf einem der Stege (8) derart angeordnet wird, dassder Trägerkörper (3a) mit seiner Anlagefläche (24) auf dem Steg (8) aufliegt, wobei die mindestens eine Schweißnaht (12) entlang einer Längsseite (13) des Trägerkörpers (3a) erzeugt wird..

9. Verfahren nach Anspruch 8, **dadurch gekennzeichnet, dass** ein Gleitelement (3) verwendet wird, welches in radialer Richtung (R) eine Länge aufweist, die größer ist als die Breite des Gleitelements (3) in Umfangsrichtung (U), wobei die mindestens eine Schweißnaht (12) entlang einer Längsseite (13) des Trägerkörpers (3a) in radialer Richtung (R) erzeugt wird.

10. Verfahren nach einem der Ansprüche 8 oder 9, **dadurch gekennzeichnet, dass** mindestens ein weiteres Gleitelement (3) auf mindestens einer der zweiten Oberflächen (22, 23) vorgesehen ist derart, dass der Trägerkörper (3a) mit einer Anlagefläche (24) an dem Käfigkörper (11) anliegt und die freie Stirnfläche (5) an dem der Anlagefläche (24) gegenüberliegenden Ende des Gleitelements (3) angeordnet ist, wobei ein Gleitelement (3) verwendet wird, welches in Umfangsrichtung (U) eine Länge aufweist, die größer ist als die Breite des Gleitelements (3) in Axialrichtung (A), wobei die mindestens eine Schweißnaht (12) entlang einer Längsseite (13) des Trägerkörpers (3a) in Umfangsrichtung (U) erzeugt wird.

11. Verfahren nach Anspruch 8, **dadurch gekennzeichnet, dass** das Gleitelement (3) durch zwei Schweißnähte (12) mit dem Steg (8) verbunden wird, wobei sich die Schweißnähte (12) entlang beider Längsseiten (13) des Trägerkörpers (3a) erstrecken.

12. Verfahren zur Herstellung eines Gleitelements (3) zur Verwendung in einem Wälzkörperkäfig (1) nach den Patentansprüchen 1 bis 7, **gekennzeichnet durch** folgende Verfahrensschritte:
G1) Bereitstellen eines Stahlbandes oder eines Vierkantstabes aus Stahl, wobei das Stahlband oder der Vierkantstab einen rechteckigen Querschnitt aufweist und eine Länge besitzt, die größer ist als eine Breite des Stahlbandes oder Vierkantstabes und größer als die Länge des herzustellenden Gleitelements (3);
G2) Aufbringen eines Gleitmaterials (6) auf eine Oberfläche (15) des Stahlbandes oder Vierkantstabes zur Bildung einer Funktionsschicht (7), wobei sich die Oberfläche (15) an einer Schmalseite des Stahlbandes oder Vierkantstabes in dessen Längsrichtung erstreckt;
G3) Zerteilen des mit der Funktionsschicht (7) versehenen Stahlbandes oder Vierkantstabes quer zu seiner Längsrichtung in einzelne Abschnitte, um einzelne Gleitelemente (3) zu erhalten, die an einer freien Stirnfläche eine Funktionsschicht (7) aus Gleitmaterial (6) und einen die Funktionsschicht (7) tragenden Trägerkörper (3a) aufweisen.

13. Verfahren nach Anspruch 8, **dadurch gekennzeichnet, dass** das Aufbringen des Gleitmaterials (6) auf die Oberfläche (15) des Stahlbandes oder Vierkantstabes durch Auftragsschweißen oder durch ein Beschichtungsverfahren erfolgt.

## Claims

1. Rolling-body cage (1) for guiding rolling bodies of a rolling bearing, in particular of a large-diameter rolling bearing, wherein the rolling-body cage (1) has at least one sliding element (3), wherein the sliding element (3) is connected to the rolling-body cage (1), and wherein the sliding element (3) has a free end surface (5), which has a sliding material (6),
**characterized**
**in that** the sliding element (3) has a prefabricated carrier body (3a), which is made of steel and is welded to the rolling-body cage (1), wherein the free end surface (5) of the sliding element (3) has a functional layer (7) made of the sliding material (6),
wherein the rolling-body cage (1) has a circular-ring-form cage body (11) with a central axis (M) extending in the axial direction of the cage body, wherein the cage body has two first surfaces (20, 21), which extend essentially perpendicularly to the central axis (M), wherein the rolling-body cage (1) has accommodating openings (4) for accommodating the rolling bodies (2), wherein a crosspiece (8) is arranged between two adjacent accommodating openings (4), this crosspiece extending in the radial direction (R), wherein the at least one sliding element (3) is arranged on one of the crosspieces (8) such that the carrier body (3a) rests on the crosspiece (8) by way of an abutment surface (24) and is welded to the rolling-body cage (1) via at least one weld seam (9),
wherein the length of the at least one sliding element (3) in the radial direction (R) is greater than the width of the at least one sliding element (3) in the circumferential direction (U),
and wherein the length of the at least one sliding element (3) in the radial direction (R) corresponds approximately to the length of the crosspiece (8) in the radial direction (R), or wherein a plurality of individual sliding elements (3) are arranged along the crosspiece (8) and are welded thereto.

2. Rolling-body cage (1) according to Claim 1, **characterized in that** the functional layer (7) is connected to the carrier body (3a) by substance-to-substance bonding or in a form-fitting manner.

3. Rolling-body cage (1) according to Claim 1 or 2, **characterized in that** the rolling-body cage (1) has two second surfaces (22, 23), which extend essentially parallel to the central axis (M), wherein at least one further sliding element (3) is welded to at least one of the second surfaces (22, 23) by way of its carrier body (3a) .

4. Rolling-body cage (1) according to Claim 4, **characterized in that**, distributed over the circumference of the rolling-body cage (1), a plurality of sliding elements (3) are welded to at least one of the first surfaces (20, 21) and a plurality of sliding elements (3) are welded to at least one of the second surfaces (22, 23) .

5. Rolling-body cage (1) according to one of the preceding claims, **characterized in that** the free end surface (5) has a contoured surface (10).

6. Rolling-body cage (1) according to Claim 5, **characterized in that** the contoured surface (10) of the sliding element (3) has a planar central portion (10a), wherein edge portions (10b, 10c) are provided on either side of the central portion (10a), as seen in the circumferential direction (U), and wherein the height of the sliding element (3) in the axial direction (A) is lower in the region of the edge portions (10b, 10c) than in the region of the central portion (10a).

7. Rolling-body cage (1) according to Claim 6, **characterized in that** the edge portions (10b, 10c) slope down linearly in the circumferential direction (U), starting from the central portion (10a).

8. Method for producing a rolling-body cage (1) for guiding rolling bodies (2) of a rolling bearing, in particular of a large-diameter rolling bearing, comprising the following method steps:
V1) a circular-ring-form cage body (11), which is made of steel and has accommodating openings (4) distributed in the circumferential direction (U) for the purpose of accommodating the rolling bodies, is provided, wherein the cage body (11) has a central axis (M) extending in the axial direction of the cage body (11), and wherein the cage body (11) has two first surfaces (20, 21), which extend essentially parallel to the central axis (M), and two second surfaces (22, 23), which extend essentially perpendicularly to the central axis (M);
V2) at least one sliding element (3), which has a carrier body (3a) made of steel and a free end surface (5) with a functional layer (7) made of a sliding material (6), is provided;
V3) the at least one sliding element (3) is arranged on at least one of the first surfaces (20, 21) such that the carrier body (3a) lies against the cage body (11) by way of an abutment surface (24) and the free end surface (5) is arranged at that end of the sliding element (3) which is located opposite the abutment surface (24);
V4) the carrier body (3a) is connected to at least one of the first surfaces (20, 21) or second surfaces (22, 23) of the cage body (11) by at least one weld seam (12),
wherein the cage body (11) has crosspieces (8), which are arranged in each case between two adjacent accommodating openings (4) and extend in the radial direction (R), wherein the at least one sliding element (3) is arranged on one of the crosspieces (8) such that the carrier body (3a) rests on the crosspiece (8) by way of its abutment surface (24), wherein the at least one weld seam (12) is generated along a longitudinal side (13) of the carrier body (3a).

9. Method according to Claim 8, **characterized in that** use is made of a sliding element (3) which has a length in the radial direction (R) which is greater than the width of the sliding element (3) in the circumferential direction (U), wherein the at least one weld seam (12) is generated in the radial direction (R) along a longitudinal side (13) of the carrier body (3a).

10. Method according to either of Claims 8 and 9, **characterized in that** at least one further sliding element (3) is provided on at least one of the second surfaces (22, 23) such that the carrier body (3a) lies against the cage body (11) by way of an abutment surface (24) and the free end surface (5) is arranged at that end of the sliding element (3) which is located opposite the abutment surface (24), wherein use is made of a sliding element (3) which has a length in the circumferential direction (U) which is greater than the width of the sliding element (3) in the axial direction (A), wherein the at least one weld seam (12) is generated in the circumferential direction (U) along a longitudinal side (13) of the carrier body (3a).

11. Method according to Claim 8, **characterized in that** the sliding element (3) is connected to the crosspiece (8) by two weld seams (12), wherein the weld seams (12) extend along both longitudinal sides (13) of the carrier body (3a).

12. Method for producing a sliding element (3) for use in a rolling-body cage (1) according to Claims 1 to 7, **characterized by** the following method steps:
G1) a steel strip or a square bar made of steel is provided, wherein the steel strip or the square bar has a rectangular cross section and has a length which is greater than a width of the steel strip or square bar and greater than the length of the sliding element (3) which is to be produced;
G2) a sliding material (6) is applied to a surface (15) of the steel strip or square bar in order to form a functional layer (7), wherein the surface (15) extends in the longitudinal direction along a narrow side of the steel strip or square bar;
G3) the steel strip or square bar provided with the functional layer (7) is divided up, in a direction transverse to its longitudinal direction, into individual portions to form individual sliding elements (3) having a functional layer (7) made of sliding material (6) on a free end surface and having a carrier body (3a), which carries the functional layer (7).

13. Method according to Claim 8, **characterized in that** the sliding material (6) is applied to the surface (15) of the steel strip or square bar by build-up welding or by a coating process.

## Revendications

1. Cage de corps de roulement (1) servant au guidage de corps de roulement d'un palier à roulement, en particulier d'un palier à roulement de grande dimension, la cage de corps de roulement (1) comprenant au moins un élément de glissement (3), l'élément de glissement (3) étant relié à la cage de corps de roulement (1), l'élément de glissement (3) comprenant une face frontale libre (5) qui comprend un matériau de glissement (6),
**caractérisée en ce que**
l'élément de glissement (3) comprend un corps de support préfabriqué (3a) en acier, qui est soudé sur la cage de corps de roulement (1), la face frontale libre (5) de l'élément de glissement (3) comprenant une couche fonctionnelle (7) en matériau de glissement (6),
la cage de corps de roulement (1) comprenant un corps de cage (11) en forme d'anneau circulaire présentant un axe médian (M) s'étendant dans la direction axiale du corps de cage, le corps de cage comprenant deux premières surfaces (20, 21) s'étendant sensiblement perpendiculairement à l'axe médian (M),
la cage de corps de roulement (1) comprenant des ouvertures de réception (4) servant à la réception des corps de roulement (2),
une nervure (8) s'étendant dans la direction radiale (R) étant disposée entre deux ouvertures de réception (4) adjacentes, l'au moins un élément de glissement (3) étant disposé sur l'une des nervures (8) de telle sorte que le corps de support (3a) repose, par une surface d'appui (24), sur la nervure (8) et soit soudé sur la cage de corps de roulement (1) par le biais d'au moins un joint de soudure (9),
la longueur de l'au moins un élément de glissement (3) dans la direction radiale (R) étant supérieure à la largeur de l'au moins un élément de glissement (3) dans la direction périphérique (U),
et la longueur de l'au moins un élément de glissement (3) dans la direction radiale (R) correspondant approximativement à la longueur de la nervure (8) dans la direction radiale (R), ou plusieurs éléments de glissement (3) individuels étant disposés le long de la nervure (8) et soudés sur celle-ci.

2. Cage de corps de roulement (1) selon la revendication 1, **caractérisée en ce que** la couche fonctionnelle (7) est reliée au corps de support (3a) par liaison de matière ou par complémentarité de formes.

3. Cage de corps de roulement (1) selon la revendication 1 ou 2, **caractérisée en ce que** la cage de corps de roulement (1) comprend deux surfaces (22, 23) s'étendant sensiblement parallèlement à l'axe médian (M), au moins un autre élément de glissement (3) étant soudé, par son corps de support (3a), sur au moins l'une des deuxièmes surfaces (22, 23).

4. Cage de corps de roulement (1) selon la revendication 4, **caractérisée en ce que**, de manière répartie sur la périphérie de la cage de corps de roulement (1), plusieurs éléments de glissement (3) sont soudés sur au moins l'une des premières surfaces (20, 21) et plusieurs éléments de glissement (3) sont soudés sur au moins l'une des deuxièmes surfaces (22, 23).

5. Cage de corps de roulement (1) selon l'une des revendications précédentes, **caractérisée en ce que** la face frontale libre (5) comprend une surface profilée (10) .

6. Cage de corps de roulement (1) selon la revendication 5, **caractérisée en ce que** la surface profilée (10) de l'élément de glissement (3) comprend une partie médiane (10a) plane, des parties de bord (10b, 10c) étant prévues des deux côtés de la partie médiane (10a) vues dans la direction périphérique (U), la hauteur de l'élément de glissement (3) dans la direction axiale (A) dans la région des parties de bord (10b, 10c) étant inférieure à celle dans la région de la partie médiane (10a).

7. Cage de corps de roulement (1) selon la revendication 6, **caractérisée en ce que** les parties de bord (10b, 10c) descendent linéairement dans la direction périphérique (U) à partir de la partie médiane (10a).

8. Procédé de fabrication d'une cage de corps de roulement (1) servant au guidage de corps de roulement (2) d'un palier à roulement, en particulier d'un palier à roulement de grande dimension, comportant les étapes suivantes :
V1) fourniture d'un corps de cage (11) en forme d'anneau circulaire en acier présentant des ouvertures de réception (4), disposées de manière répartie dans la direction périphérique (U), servant à la réception des corps de roulement, le corps de cage (11) comprenant un axe médian (M) s'étendant dans la direction axiale du corps de cage (11), le corps de cage (11) comprenant deux premières surfaces (20, 21) s'étendant sensiblement parallèlement à l'axe médian (M) et deux deuxièmes surfaces (22, 23) s'étendant sensiblement perpendiculairement à l'axe médian (M),;
V2) fourniture d'au moins un élément de glissement (3), lequel comprend un corps de support (3a) en acier et une face frontale libre (5) présentant une couche fonctionnelle (7) en un matériau de glissement (6) ;
V3) disposition de l'au moins un élément de glissement (3) sur au moins l'une des premières surfaces (20, 21) de telle sorte que le corps de support (3a) s'appuie, par une surface d'appui (24), sur le corps de cage (11) et que la face frontale libre (5) soit disposée à l'extrémité de l'élément de glissement (3) opposée à la surface d'appui (24);
V4) liaison du corps de support (3a) à au moins l'une des premières surfaces (20, 21) ou deuxièmes surfaces (22, 23) du corps de cage (11) par le biais d'au moins un joint de soudure (12), le corps de cage (11) comprenant des nervures (8) disposées respectivement entre deux ouvertures de réception (4) adjacentes et s'étendant dans la direction radiale (R), l'au moins un élément de glissement (3) étant disposé sur l'une des nervures (8) de telle sorte que le corps de support (3a) repose, par sa surface d'appui (24), sur la nervure (8), l'au moins un joint de soudure (12) étant produit le long d'un côté longitudinal (13) du corps de support (3a).

9. Procédé selon la revendication 8, **caractérisé en ce qu'**un élément de glissement (3) est utilisé, lequel présente une longueur dans la direction radiale (R), laquelle longueur est supérieure à la largeur de l'élément de glissement (3) dans la direction périphérique (U), l'au moins un joint de soudure (12) étant produit le long d'un côté longitudinal (13) du corps de support (3a) dans la direction radiale (R).

10. Procédé selon l'une des revendications 8 ou 9, **caractérisé en ce qu'**au moins un autre élément de glissement (3) est prévu sur au moins l'une des deuxièmes surfaces (22, 23) de telle sorte que le corps de support (3a) s'appuie, par une surface d'appui (24), sur le corps de cage (11) et que la face frontale libre (5) soit disposée à l'extrémité de l'élément de glissement (3) opposée à la surface d'appui (24), un élément de glissement (3) étant utilisé, lequel présente, dans la direction périphérique (U), une longueur qui est supérieure à la largeur de l'élément de glissement (3) dans la direction axiale (A), l'au moins un joint de soudure (12) étant produit le long d'un côté longitudinal (13) du corps de support (3a) dans la direction périphérique (U).

11. Procédé selon la revendication 8, **caractérisé en ce que** l'élément de glissement (3) est relié à la nervure (8) par le biais de deux joints de soudure (12), les joints de soudure (12) s'étendant le long des deux côtés longitudinaux (13) du corps de support (3a).

12. Procédé de fabrication d'un élément de glissement (3) destiné à être utilisé dans une cage de corps de roulement (1) selon les revendications 1 à 7, **caractérisé par** les étapes suivantes :
G1) fourniture d'une bande en acier ou d'une barre carrée en acier, la bande en acier ou la barre carrée comprenant une section transversale rectangulaire et présentant une longueur qui est supérieure à une largeur de la bande en acier ou de la barre carrée et supérieure à la longueur de l'élément de glissement (3) à fabriquer ;
G2) application d'un matériau de glissement (6) sur une surface (15) de la bande en acier ou de la barre carrée pour la formation d'une couche fonctionnelle (7), la surface (15) s'étendant sur un petit côté de la bande en acier ou de la barre carrée dans sa direction longitudinale ;
G3) division de la bande en acier ou de la barre carrée pourvue de la couche fonctionnelle (7) en parties individuelles transversalement à sa direction longitudinale, afin d'obtenir des éléments de glissement (3) individuels qui comprennent, sur une face frontale libre, une couche fonctionnelle (7) en matériau de glissement (6) et un corps de support (3a) supportant la couche fonctionnelle (7).

13. Procédé selon la revendication 8, **caractérisé en ce que** l'application du matériau de glissement (6) sur la surface (15) de la bande en acier ou de la barre carrée s'effectue par soudage de rechargement ou par un procédé de revêtement.
